# EUROPEAN PATENT SPECIFICATION

(11) **EP 1 642 269 B1**
(45) Date of publication and mention of the grant of the patent: **11.06.2008**
(21) Application number: 04737118.2
(22) Date of filing: 22.06.2004
(51) Int. Cl.: G11B 7/006, G11B 7/26

(54) **A PHASE CHANGE MEDIUM ERASABLE AT LOW SPEED AND RECORDABLE AT HIGH SPEED AND A DRIVING DEVICE FOR SUCH A MEDIUM**
PHASENWECHSELAUFZEICHNUNGSMEDIUM WELCHES BEI GERINGER GESCHWINDIGKEIT LÖSCHBAR UND BEI HOHER GESCHWINDIGKEIT BESCHREIBBAR IST UND GERÄT ZUR VERWENDUNG EINES SOLCHEN MEDIUMS
SUPPORT OPTIQUE REINSCRIPTIBLE EFFACABLE A FAIBLE VITESSE ET ENREGISTRABLE A HAUTE VITESSE, ET DISPOSITIF DE LECTURE D'UN TEL SUPPORT

(30) Priority: 26.06.2003 EP 03300039
(43) Date of publication of application: 05.04.2006
(73) Proprietor: Koninklijke Philips Electronics N.V., 5621 BA Eindhoven (NL)
(72) Inventor: MARTENS, Hubert, F-75008 PARIS (FR); VAN DEN OETELAAR, Ronald, F-75008 PARIS (FR); VLUTTERS, Ruud, F-75008 PARIS (FR)
(74) Representative: van Oudheusden-Perset, Laure E.
(86) International application number: PCT/IB2004/002111
(87) International publication number: WO 2004/114288

(56) References cited:
- EP-A- 0 373 955
- EP-A- 1 047 056
- US-A- 5 025 439
- US-A1- 2002 167 879
- US-A1- 2003 039 192

## Description

### Field of the invention

The present invention relates to a phase-change optical storage medium, to a device for driving a phase-change optical storage medium and to a method for driving a phase-change optical storage medium.

Phase change optical storage media have a layer made of a material that is initially in an amorphous state and that is put in a crystalline state during the manufacturing process. Data are written on a phase change medium by locally heating the medium to a temperature at which it changes from the crystalline state to the amorphous state, thus creating amorphous marks with a different reflectance than the surrounding crystalline area.

A change from the crystalline state to the amorphous state can be achieved at high speed, which makes such media very attractive for applications requiring high storage densities and high recording speed.

Typically, a phase change medium that is compliant with the DVD+R standard can be written at a speed up to 16x where x is the speed at which the medium is read referred to as reference speed (DVD+R is the abbreviate for Digital Versatile Disc +R where R stands for Recordable).

### Technological background of the invention

As mentioned in EP patent 0286406 B1, phase change media are physically rewritable because re-crystallization of amorphous marks can be achieved by appropriate heating. However as further stated in EP patent 0286406 B1, changes from the amorphous state back to the crystalline state cannot be achieved at high speed with conventional phase change media. EP patent 0286406 B1 proposes a phase change medium which recording layer is made of a new material. With this new material, both recording and erasing can be achieved at high speed.

High-speed rewritable phase change media of the type described in EP patent 0286406 are directed to applications for which a high-speed erasing capability is needed.

The documents EP 0373955 A1 and EP 047056 A1 disclose optical recording meadia that are capable of high speed recording and erasing.

An object of the invention is to propose a cost-effective solution for applications that require a high-speed recording capability but for which a truly rewritable capability is not needed.

### Summary of the invention

This is achieved with a device as claimed in any of the claims 1 to 6, with a medium as claimed in claim 7, and with a method as claimed in claim 8.

A device and a method according to the invention are intended for driving a phase-change medium having a layer made of a material capable of changing locally between an amorphous state and a crystalline state, said material being characterized by a maximum crystalline velocity above which change from said amorphous state to said crystalline state cannot be achieved.

A device according to the invention comprises:
- a user interface through which a user can select an operating mode amongst a plurality of operating modes including a writing mode for writing data on said medium by locally changing said material from said crystalline state to said amorphous state and an erasing mode for erasing data written on said medium by locally changing said material back from said amorphous state to said crystalline state,
- means for producing a laser beam for scanning said medium,
- means for controlling the power of said laser beam depending on the selected operating mode, a writing power in a writing mode being higher than an erasing power in an erasing mode, and
- means for rotating said medium at a linear velocity that depends on the selected operating mode, the linear velocity applied in said writing mode being higher than said maximum crystalline velocity, and the linear velocity applied in said erasing mode being equal to or lower than said maximum crystalline velocity.

A method according to the invention comprises the steps of:
- reading a user selection amongst a plurality of available operating modes including a writing mode for writing data on said medium by locally changing said material from said crystalline state to said amorphous state and an erasing mode for erasing data written on said medium by locally changing said material back from said amorphous state to said crystalline state,
- producing a laser beam for scanning said medium,
- controlling the power of said laser beam depending on the selected operating mode, a writing power in a writing mode being higher than an erasing power in an erasing mode, and
- rotating said medium at a linear velocity that depends on the selected operating mode, the linear velocity applied in said writing mode being higher than said maximum crystalline velocity, and the linear velocity applied in said erasing mode being equal to or lower than said maximum crystalline velocity.

A phase-change write-once read-many medium according to the invention has:
a) a layer made of a material capable of changing locally between an amorphous state and a crystalline state when heated by a laser having an appropriate power while said medium is rotated at an appropriate linear velocity, said material been characterized by a maximum crystalline velocity above which change from said amorphous state to said crystalline state cannot be achieved,
b) a wobbled track which wobble carries medium-related information, said medium-related information comprising the value of:
   - the power and the linear velocity, referred to as writing power and writing linear velocity, to be used for locally changing said material from said crystalline state to said amorphous state,
   - the power and the linear velocity, referred to as erasing power and erasing linear velocity, to be used for locally changing said material from said amorphous state to said crystalline state,
   - wherein said writing speed is higher than said maximum crystalline velocity and said erasing speed is not higher than said maximum crystalline velocity, and said writing power is higher than said erasing power.

The inventors of the present patent application have recognized that the conventional phase change technology is an appropriate solution for applications that require a high-speed writing capability but for which a truly rewritable capability is not needed. An example of such an application is the duplication of a video content from a sketch that was successfully tested.

The inventors have also recognized that Write-Once Read-Many (WORM) media have the drawback that when the data written on the medium become obsolete or when the writing operation has failed, the medium cannot be re-used.

Therefore a phase change medium, a device and a method for driving a phase change medium are proposed that allow writing at high speed and erasing at low speed. The proposed low-speed erasing option must be seen as a formatting option that can be applied to the whole medium (or to part of the medium) so as to put the medium (or part of the medium) back to a virgin state. With the proposed phase change medium, driving device and driving method, direct overwriting of data is not possible. The data have first to be erased at low speed before new data can be written on the medium at high speed. Therefore the proposed medium is not truly rewritable.

The proposed invention is of great interest for the end user because it provides him/her with a relatively cheap medium with high-speed recording capability, well adapted to most consumer applications, while giving him/her the option of formatting the medium when needed. For instance, the proposed invention will be advantageously used for DVD+R high-speed applications.

### Brief description of the drawings

These and other aspects of the invention are further described with reference to the following drawings:
- figure 1 is a schematic representation of an example of medium according to the invention;
- figure 2 is a schematic block diagram of an example of device according to the invention;
- figure 3 is a block diagram of a method according to the invention of driving a recordable medium.

### Description of preferred embodiment

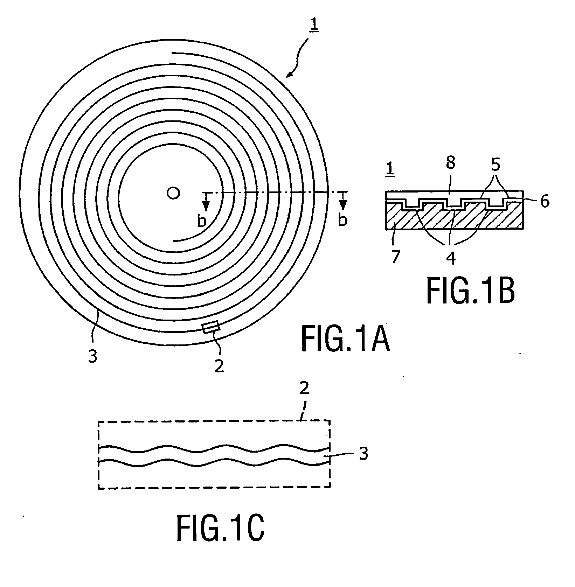

Figure 1 shows a medium 1, figure 1A being a plane view, figure 1B showing a small part in a sectional view taken on line b-b, and figure 1B showing a portion 2 of the medium 1 in a larger scale. The medium 1 is a disc having tracks forming each a 360° turn of a spiral line 3. Each track comprises a groove 4 and a land 5. For the purpose of recording data, the medium 1 has a recording layer 6, which is deposited on a transparent substrate 7 and which is covered by a protective coating 8. The data are recorded on the grooves 4. The tracks are scanned by a laser beam that enters the medium 1 through the substrate 7. The tracks have a continuous sinusoidal deviation from their average centreline. This sinusoidal deviation is referred to as wobble. In some standards the wobble is modulated to carry information. For instance in DVD+R the wobble is phase-modulated.

The medium is a phase change medium which means that the recording layer 6 is made of a material capable of changing locally between an amorphous state and a crystalline state. Data are written by locally heating the medium to a temperature at which it changes from the crystalline state to the amorphous state, thus creating amorphous marks with a different reflectance than the surrounding crystalline area. Conversely, data are erased by locally heating the medium to a temperature at which it changes from the amorphous state back to the crystalline state.

The material of the recording layer 6 is characterized by a maximum crystalline velocity above which change from said amorphous state to said crystalline state cannot be achieved.

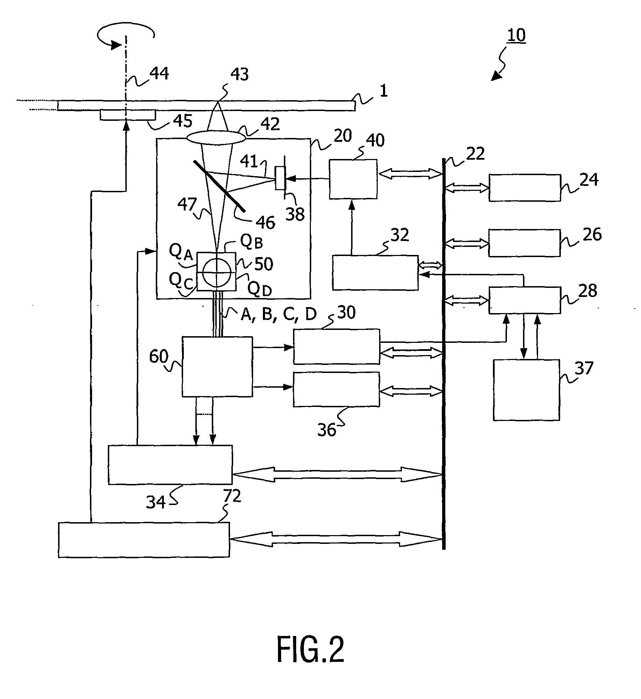

Figure 2 shows an example of a device 10 according to the invention for driving the medium 1. The device 10 comprises inter alias an optical unit 20, a bus 22, a microprocessor assembly 24, a user interface 26 a source encoder/decoder 28, a channel decoder 30, a channel encoder 32, a servo block 34, a motor control unit 35 and a wobble processing block 36. The source encoder/decoder 28 is coupled to a host system 37 (by way of example the host system 37 can be a PC, an audio player, a video layer...). The microprocessor assembly 24, the user interface 26, the source encoder/decoder 28, the channel decoder 30, the channel encoder 32, the servo block 34, the motor control unit 35 and the wobble processing block 36 are connected to the bus 22.

The user interface 26 is designed so as to allow a user to select an operating mode amongst a plurality of operating modes including:
- a writing mode in which data provided by the host system 37 are written on the medium-1 by locally changing the material of the recording layer from the crystalline state to the amorphous state, and
- an erasing mode in which data written on the medium 1 are erased by locally changing the material of the recording layer from the amorphous state back to the crystalline state.

Advantageously a reading mode is also available in which data written on the medium 1 are read and delivered to the host system 37.

The optical unit 20 comprises a radiation source 38, for instance a semiconductor laser, generating a laser beam 41 that is directed onto a track of the medium 1 by means of an optical system comprising, inter alias, a focussing objective 42. The radiation source 38 is controlled by a radiation source control unit 40. The radiation source control unit 40 is connected to the bus 22 and controls the power of the laser beam 41 depending on the selected operating mode.

Typically, the radiation source control unit 40 drives the radiation source 38 so that the produced laser beam 41 has:
- a low power when the selected mode is the reading mode,
- an intermediate power when the selected mode is the erasing mode,
- a high power when the selected mode is the writing mode.

By way of example, the reading power is set to 0,7mW±0,1mW, the writing power is set between 35 mW for a writing linear velocity equal to 16x (the writing power depends on the writing linear velocity), and the erasing power is comprised between 5mW and 10mW.

The laser beam 41 produces a small spot 43 on the medium 1. For the spot 43 to scan the tracks, the medium is rotated about a shaft 44 by a motor 45. The motor 45 is controlled by the motor control unit 35. The motor control circuit 35 adapts the linear velocity of the motor depending on the selected operating mode. Conventionally, the linear velocity used in the reading mode is referred to as reference speed and is noted x. By way of example in the DVD+R standard the reading speed is x=3,49m.s⁻¹. According to the invention:
- the linear velocity used when the writing mode is selected is high (it can be up to 16x);
- the linear velocity used when the erasing mode is selected is low; it is lower than the maximum crystalline velocity which depends on the material used for the recording layer 6; typically it is comprised between 1x and 2,4x.

The laser beam 41 is reflected by the medium 1. The projected and reflected beams are separated one from the other by a beam splitter 46 (for example a partially transparent mirror). The reflected radiation beam 47 is passed on to a photo detector 50. The photo detector 50 has a radiation sensitive surface divided into a plurality of quadrants so as to generate a plurality of photocurrents. In figure 2, a four-quadrants photo detector is represented by way of example. This is not restrictive. The four quadrants of the photo detector 50 carry reference number Q_{A}, Q_{B}, Q_{C} and Q_{D} respectively. They generate four photocurrents A, B, C, and D.

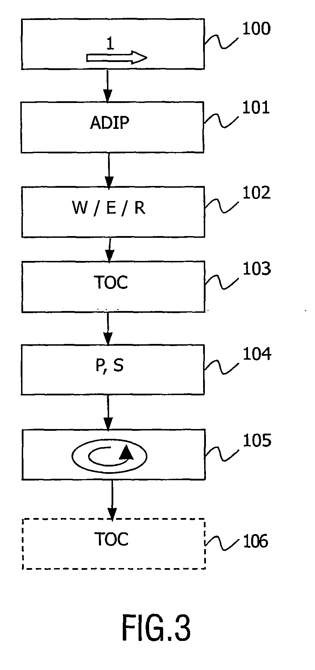

The four photocurrents A, B, C and D are forwarded to a pre-processing block 60 responsible for generating:
- several difference signals that are input to the servo block 34,
- a wobble signal that is input to the wobble processing block 36, and
- a data signal that is input to the channel decoder 30.
   The servo block 34 is responsible for controlling the optical unit 20 (including positioning the optical unit 20, focussing the laser beam 41, tracking the spiral line 3).
   The wobble processing block 36 is responsible for processing the wobble signal so as to recover the information carried by the wobble signal.
   The channel decoder 30 is responsible for recovering the source-encoded data from the data signal read by the optical unit 20. The source-encoded data are forwarded to the source encoder/decoder 28 in order to be decoded. Eventually, the decoded data are delivered to the host system 37.
   The host system 37 can also provide data intended to be written on the medium 1. These data are encoded by the source encoder/decoder 28. The source-encoded data are then processed by the channel encoder 32. The channel-encoded data are applied to the radiation source control unit 40.
   As explained by reference to figure 1, the wobble signal is modulated so as to carry information (usually physical format information). In the DVD+R standard this information is called Address-in-Pregroove (or ADIP). The ADIP notably comprises data about the reading and writing power and the reading and writing linear velocity. Currently, there is capacity for transmitting additional pieces of information compared to the ADIP defined in the standard. In a preferred embodiment of the invention, the erasing power and the erasing linear velocity are transmitted as a part of the ADIP. This is advantageous because the ADIP information is included in the medium itself during the manufacturing stage. It doesn't have to be written on disc in a latter stage and it can neither be removed nor modified.
   Alternatively, the erasing power and the erasing linear velocity can be written in the information zone of the medium (that is in the recordable area of the medium) or it can be stored in the device 10.
   In order to allow for partial recording of the medium and subsequent appending of data to a partly recorded medium, the concept of multi-sessions has been introduced in many standards. For instance, a medium compliant with the DVD+R standard may contain a single session or a plurality of sessions. A table referred to as Table Of Content is stored at the beginning of the information zone and contains the necessary information about recording on the disc (in particular, the location of the sessions).
   In an advantageous embodiment the user interface 26 is designed so as to allow selection by the user of an area to be erased on the medium. For instance, the area to the erased may be a session, a plurality of sessions, or the whole information zone.
   When the user selects one or more session(s), the microprocessor of the microprocessor assembly 24 recovers in the Table Of Content the locations of the selected session(s) and drives the servo block 34 accordingly. As a result, the position of the laser beam 41 is controlled so as to scan only the locations of the selected session(s). After one or more sessions have been erased, the Table Of Content must be updated so as to remove reference to the erased session(s).
   In another embodiment, when the whole medium is to be erased (either because this is the option selected by the user, or because there is no other erasing option available), the microprocessor of the microprocessor assembly 24 checks in the Table Of Content the locations of the areas of the medium that are recorded. This information is used to skip during the erasing process the parts of the medium that are not recorded (the servo block 34 is instructed accordingly by the microprocessor). This embodiment is advantageous because it leads to a reduction in the amount of time required for the full erasing process (as erasing is done at low speed it is a rather long process; typically it may take 1 to 2 hours).
   The block diagram of figure 3 is a schematic representation of a preferred embodiment of a method according to the invention for driving the medium 1.
- in box 100 the medium 1 is introduced in the device 10;
- then, in box 101 the required information is recovered from the medium 1, notably the ADIP information including the erasing power and the erasing linear velocity be used with the medium 1;
- then, in box 102, the user is prompted to select an operating mode amongst a plurality of operating modes including a writing mode W, an erasing mode E and optionally a reading mode R;
- then, in box 103, depending on the selected operating mode, enquiries are made in the Table Of Content to determine the location(s) to be scanned;
- then, in box 104, the power P and the linear velocity S are set depending on the selected operating mode;
- then, in box 105, the medium is scanned at the appropriate locations with a laser beam having the appropriate power while the medium is rotated at the appropriate linear velocity so as to read or write or erase the medium;
- then, in box 106, when applicable, the Table Of Content is updated.

With respect to the described phase change storage medium, driving device and driving method, modifications or improvements may be proposed without departing from the scope of the invention. The invention is thus not limited to the examples provided, in particular it is not limited to the DVD+R standard.

In the embodiment described with reference to figure 2, the wobble is a modulated signal used to carry location information but not for tracking. This is not restrictive. The wobble signal can also be used for tracking as an alternative to the known "one-spot push-pull" or "3-spots push-pull" methods. The invention is applicable independently on the type of wobble signal (pure periodic or modulated wobble signal) and independently on the way the wobble signal is used (used for tracking and/or carrying information). When the wobble is not modulated, then the information regarding the power and linear velocity to be used have to be located in the information zone of the medium.

The embodiment of figure 2 uses a four-quadrant photo-detector. This is not restrictive. For instance a two-segments photo-detector having a dividing line running parallel to the direction of the tracks to be scanned can be used instead of a four-quadrant photo-detector.

The use of the word "comprise" does not exclude the presence of other elements or steps than those listed in the claims or in the description.

## Claims

1. A device (10) for driving a phase-change medium (1) having a layer (6) made of a material capable of changing locally between an amorphous state and a crystalline state, said material having a maximum crystalline velocity above which change from said amorphous state to said crystalline state cannot be achieved, said device comprising:
- a user interface (26) through which a user can select an operating mode amongst a plurality of operating modes including a writing mode for writing data on said medium by locally changing said material from said crystalline state to said amorphous state and an erasing mode for erasing data written on said medium by locally changing said material back from said amorphous state to said crystalline state,
- means for producing a laser beam for scanning said medium,
- means (40) for controlling the power of said laser beam depending on the selected operating mode, a writing power in a writing mode being higher than an erasing power in an erasing mode and
- means (72) for rotating said medium at a linear velocity that depends on the selected operating mode, the linear velocity applied in said writing mode being higher than said maximum crystalline velocity, and the linear velocity applied in said erasing mode being equal to or lower than said maximum crystalline velocity.

2. A device as claimed in claim 1, wherein said user interface is further designed so as to allow selection of a reading mode for reading the data written on said medium.

3. A device as claimed in claim 1, comprising means for reading on said medium the value of the power and the linear velocity to be used in said erasing mode.

4. A device as claimed in claim 1 wherein said user interface is designed so as to allow the user for selecting an area of data to be erased on said medium, said device comprising means (34) for controlling the position of said laser beam so as to scan only said area of data in said erasing mode.

5. A device as claimed in claim 4, comprising means for determining the location on said medium of said area of data by looking said location up in a list of recorded-areas stored on said medium, and means for removing said area of data from said list of recorded-areas after said area of data was erased.

6. A device as claimed in claim 1, comprising means for determining the area(s) of the medium where data are written, and means for controlling the position of said laser beam so as to scan only said area(s) of data in said erasing mode.

7. A phase-change medium having:
a) a layer made of a material capable of changing locally between an amorphous state and a crystalline state when heated by a laser having an appropriate power while said medium is rotated at an appropriate linear velocity, said material having a maximum crystalline velocity above which change from said amorphous state to said crystalline state cannot be achieved,
b) a wobbled track which wobbling carries medium-related information, said medium-related information comprising the value of:
- the power and the linear velocity, referred to as writing power and writing linear velocity, to be used for locally changing said material from said crystalline state to said amorphous state,
- the power and the linear velocity, referred to as erasing power and erasing linear velocity, to be used for locally changing said material from said amorphous state to said crystalline state,
- wherein said writing linear velocity is higher than said maximum crystalline velocity and said erasing linear velocity is not higher than said maximum crystalline velocity, and said writing power is higher than said erasing power.

8. A method for driving of a phase change medium having a layer made of a material capable of changing locally between an amorphous state and a crystalline state, said material having a maximum crystalline velocity above which change from said amorphous state to said crystalline state cannot be achieved, said method comprising the steps of:
- reading a user selection amongst a plurality of available operating modes including a writing mode for writing data on said medium by locally changing said material from said crystalline state to said amorphous state and an erasing mode for erasing data written on said medium by locally changing said material back from said amorphous state to said crystalline state,
- producing a laser beam for scanning said medium,
- controlling the power of said laser beam depending on the selected operating mode, a writing power in a writing mode being higher than an erasing power in an erasing mode, and
- rotating said medium at a linear velocity that depends on the selected operating mode, the linear velocity applied in said writing mode being higher than said maximum crystalline velocity, and the linear velocity applied in said erasing mode being equal to or lower than said maximum crystalline velocity.

## Patentansprüche

1. Anordnung (10) zum Ansteuern eines Phasenänderungsmediums (1) mit einer Schicht (6) aus einem Material, das imstande ist, örtlich zwischen einem amorphen Zustand und einem kristallinen Zustand zu wechseln, wobei das genannte Material eine maximale kristalline Geschwindigkeit hat, über der ein Wechsel aus dem genannten amorphen Zustand in den genannten kristallinen Zustand nicht erreicht werden kann, wobei die genannte Anordnung Folgendes umfasst:
- eine Benutzerschnittstelle (26), über die ein Benutzer eine bestimmte Betriebsart von vielen Betriebsarten, einschließlich einer Schreibbetriebsart zum Schreiben von Daten auf dem genannten Medium selektieren kann, und zwar **dadurch**, dass das genannte Material örtlich aus dem genannten kristallinen Zustand in den genannten amorphen Zustand gewechselt wird, und einer Löschbetriebsart zum Löschen von Daten auf dem genannten Medium **dadurch**, dass das genannte Material örtlich aus dem amorphen Zustand in den genannten kristallinen Zustand gebracht wird,
- Mittel zum Erzeugen eines Laserbündels zum Abtasten des genannten Mediums,
- Mittel (40) zum Steuern der Leistung des genannten Laserbündels abhängig von der selektierten Betriebsart, wobei eine Schreibleistung in einer Schreibbetriebsart höher ist als eine Löschleistung in einer Löschbetriebsart, und
- Mittel (72) zum Drehen des genannten Mediums mit einer linearen Geschwindigkeit, die von der genannten Betriebsart abhängig ist, wobei die in der genannten Schreibbetriebsart angewandte lineare Geschwindigkeit höher ist als die genannte maximale kristalline Geschwindigkeit, und die in der genannten Löschbetriebsart angewandte lineare Geschwindigkeit der genannten maximalen kristallinen Geschwindigkeit entspricht oder niedriger ist als dieselbe.

2. Anordnung nach Anspruch 1, wobei die genannte Benutzerschnittstelle weiterhin entworfen ist, eine Lesebetriebsart zum Auslesen der auf dem genannten Medium geschriebenen Daten zu selektieren.

3. Anordnung nach Anspruch 1, mit Mitteln zum auf dem genannten Medium Auslesen des Wertes der Leistung und der linearen Geschwindigkeit, die bei der genannten Löschbetriebsart angewandet werden sollen.

4. Anordnung nach Anspruch 1, wobei die genannte Benutzerschnittstelle derart entworfen ist, dass der Benutzer ein Gebiet selektieren kann, das auf dem genannten Medium gelöscht werden soll, wobei die genannte Anordnung Mittel (34) aufweist zur Steuerung der Position des genannten Laserbündels um nur das genannte Datengebiet in der genannten Löschbetriebsart zu löschen.

5. Anordnung nach Anspruch 4, mit Mitteln zum Ermitteln der Stelle in dem genannten Datengebiet auf dem genannten Medium **dadurch**, dass die genannte Stelle in einer Liste aufgezeichneter, auf dem genannten Medium gespeicherter Gebiete nachgeschlagen wird, und mit Mitteln zum Entfernen des genannten Datengebietes aus der genannten Liste aufgezeichneter Gebiete, nachdem das genannten Datengebiet gelöscht worden ist.

6. Anordnung nach Anspruch 1, mit Mitteln zum Ermitteln des Gebietes (der Gebiete) des Mediums, in dem (denen) Daten geschrieben sind, und mit Mitteln zur Steuerung der Position des genannten Laserbündels um nur das (die) genannte(n) Datengebiet(e) in der genannten Löschmode abzutasten.

7. Phasenänderungsmedium, das Folgendes umfasst:
a) eine Schicht eines Materials, das imstande ist, örtlich zwischen einem amorphen Zustand und einem kristallinen Zustand zu wechseln, wenn erhitzt durch einen Laser mit einer geeigneten Leistung, während das genannte Medium mit einer geeigneten linearen Drehzahl gedreht wird, wobei das genannte Material eine maximale kristalline Geschwindigkeit hat, über der ein Wechsel aus dem genannten amorphen Zustand in den genannten kristallinen Zustand nicht erreicht werden kann,
b) eine wackelige Spur, wobei diese Wackelform Medium relatierte Information aufweist, wobei diese Information die nachfolgenden Werte aufweist
- die Leistung und die lineare Geschwindigkeit, die als Schreibleistung bzw. als lineare Schreibgeschwindigkeit bezeichnet werden, angewandt um das genannte Material aus dem genannten kristallinen Zustand in den genannten amorphen Zustand zu versetzen,
- die Leistung und die lineare Geschwindigkeit, die als Löschleistung und als Löschgeschwindigkeit bezeichnet werden, angewandt um das genannte Material örtlich aus dem genannten amorphen Zustand in den genannten kristallinen Zustand zu versetzen,
- wobei die genannte lineare Schreibgeschwindigkeit höher ist als die genannte maximale kristalline Geschwindigkeit und wobei die genannten lineare Löschgeschwindigkeit nicht höher ist als die genannte maximale kristalline Geschwindigkeit, und wobei die genannte Schreibleistung höher ist als die genannte Löschleistung.

8. Verfahren zum Steuern eines Phasenänderungsmediums mit einer Schicht aus einem Material, das imstande ist, örtlich zwischen einem amorphen Zustand und einem kristallinen Zustand zu wechseln, wobei das genannte Material eine maximale kristalline Geschwindigkeit hat, über der ein Wechsel aus dem genannten amorphen Zustand in den genannten kristallinen Zustand nicht erreicht werden kann, wobei das genannte Verfahren die nachfolgenden Verfahrensschritte umfasst:
- das Lesen einer Benutzerselektion aus einer Vielzahl verfügbarer Betriebsarten, mit einer Schreibbetriebsart zum Schreiben von Daten auf dem genannten Medium, **dadurch**, dass das genannte Material örtlich aus dem genannten kristallinen Zustand in den genannten amorphen Zustand gebracht wird, und einer Löschbetriebsart zum Löschen von Daten, die auf dem genannten Medium geschrieben sind, und zwar durch örtliche Rückänderung des genannten Materials aus dem genannten amorphen Zustand in den genannten kristallinen Zustand,
- das Erzeugen eines Laserbündels zum Abtasten des genannten Mediums,
- das Steuern der Leistung des genannten Laserbündels, und zwar abhängig von der selektierten Betriebsart, wobei eine Schreibleistung in einer Schreibbetriebsart höher ist als eine Löschleistung in einer Löschbetriebsart, und
- das Drehen des genannten Mediums mit einer linearen Geschwindigkeit, die von der selektierten Betriebsart abhängig ist, wobei die in der genannten Schreibbetriebsart angewandte lineare Geschwindigkeit höher ist als die genannte maximale kristalline Geschwindigkeit, und wobei die in der genannten Löschbetriebsart angewandte lineare Geschwindigkeit der genannten maximalen kristallinen Geschwindigkeit entspricht oder niedriger ist als dieselbe.

## Revendications

1. Dispositif (10) de lecture d'un support à changement de phase (1) muni d'une couche (6) faite d'un matériau capable de changer localement entre un état amorphe et un état cristallin, ledit matériau ayant une vitesse cristalline maximale au-delà de laquelle un changement dudit état amorphe audit état cristallin ne peut pas être réalisé, ledit dispositif comprenant:
- une interface d'utilisateur (26) par laquelle un utilisateur peut sélectionner un mode de fonctionnement parmi une pluralité des modes de fonctionnement incluant un mode d'écriture permettant d'écrire des données sur ledit support en changeant localement ledit matériau dudit état cristallin audit état amorphe et un mode d'effacement permettant d'effacer des données écrites sur ledit support en ramenant localement ledit matériau dudit état amorphe audit état cristallin,
- un moyen permettant de produire un faisceau laser pour balayer ledit support,
- un moyen (40) permettant de commander la puissance dudit faisceau laser en fonction du mode de fonctionnement sélectionné, une puissance d'écriture dans un mode d'écriture étant plus grande qu'une puissance d'effacement dans un mode d'effacement et
- un moyen (72) permettant de faire tourner ledit support à une vitesse linéaire qui dépend du mode de fonctionnement sélectionné, la vitesse linéaire appliquée dans ledit mode d'écriture étant plus grande que ladite vitesse cristalline maximale, et la vitesse linéaire appliquée dans ledit mode d'effacement étant égale à ou plus petite que ladite vitesse cristalline maximale.

2. Dispositif selon la revendication 1, dans lequel ladite interface d'utilisateur est de plus conçue de façon à permettre une sélection d'un mode de lecture permettant de lire les données écrites sur ledit support.

3. Dispositif selon la revendication 1, comprenant un moyen permettant de lire sur ledit support la valeur de la puissance et de la vitesse linéaire à utiliser dans ledit mode d'effacement.

4. Dispositif selon la revendication 1, dans lequel la dite interface d'utilisateur est conçue de façon à permettre à l'utilisateur de sélectionner une zone de données à effacer sur ledit support, ledit dispositif comprenant un moyen (34) permettant de commander la position dudit faisceau laser de façon à seulement balayer ladite zone de données dans ledit mode d'effacement.

5. Dispositif selon la revendication 4, comprenant un moyen permettant de déterminer l'emplacement sur ledit support de ladite zone de données en recherchant ledit emplacement dans une liste de zones enregistrées stockée sur ledit support, et un moyen permettant d'enlever ladite zone de données de ladite liste de zones enregistrées après que ladite zone de données ait été effacée.

6. Dispositif selon la revendication 1, comprenant un moyen permettant de déterminer la ou les zones du support où les données sont écrites, et un moyen permettant de commander la position dudit faisceau laser de façon à seulement balayer ladite ou lesdites zones de données dans ledit mode d'effacement.

7. Support à changement de phase comportant:
a) une couche faite d'un matériau capable de changer localement entre un état amorphe et un état cristallin lorsqu'il est chauffé par un laser ayant une puissance appropriée alors que ledit support tourne à une vitesse linéaire appropriée, ledit matériau ayant une vitesse cristalline maximale au-delà de laquelle un changement dudit état amorphe audit état cristallin ne peut pas être réalisé,
b) une piste oscillante dont l'oscillation transporte des informations relatives au support, lesdites informations relatives au support comprenant la valeur de:
- la puissance et la vitesse linéaire, référencées comme la puissance d'écriture et la vitesse linéaire d'écriture, à utiliser pour changer localement ledit matériau dudit état cristallin audit état amorphe,
- la puissance et la vitesse linéaire, référencées comme la puissance d'effacement et la vitesse linéaire d'effacement, à utiliser pour changer localement ledit matériau dudit étant amorphe audit état cristallin,
- dans lequel ladite vitesse linéaire d'écriture est plus grande que ladite vitesse cristalline maximale et ladite vitesse linéaire d'effacement n'est pas plus grande que ladite vitesse cristalline maximale, et ladite puissance d'écriture est plus grande que ladite puissance d'effacement.

8. Procédé de lecture d'un support à changement de phase muni d'une couche faite d'un matériau capable de changer localement entre un état amorphe et un état cristallin, ledit matériau ayant une vitesse cristalline maximale au-delà de laquelle un changement dudit état amorphe audit état cristallin ne peut pas être réalisé, ledit procédé comprenant les étapes suivantes:
- lecture d'une sélection d'utilisateur parmi une pluralité de modes de fonctionnement disponibles incluant un mode d'écriture permettant d'écrire des données sur ledit support en changeant localement ledit matériau dudit état cristallin audit état amorphe et un mode d'effacement permettant d'effacer des données écrites sur ledit support en ramenant localement ledit matériau dudit état amorphe audit état cristallin,
- production d'un faisceau laser permettant de balayer ledit support,
- commande de la puissance dudit faisceau laser en fonction du mode de fonctionnement sélectionné, une puissance d'écriture dans un mode écriture étant plus grande qu'une puissance d'effacement dans un mode d'effacement, et
- rotation dudit support à une vitesse linéaire qui dépend du mode de fonctionnement sélectionné, la vitesse linéaire appliquée dans ledit mode d'écriture étant plus grande que ladite vitesse cristalline maximale, et la vitesse linéaire appliquée dans ledit mode d'effacement étant égale à ou plus petite que ladite vitesse cristalline maximale.
